**Europäisches Patentamt**

**European Patent Office**

**Office européen des brevets**

(19)

(11) Publication number : **0 153 511 B2**

(12) ## NEW EUROPEAN PATENT SPECIFICATION

(45) Date of publication of the new patent specification : **30.12.92 Bulletin 92/53**

(51) Int. Cl.⁵ : **B29C 47/92,** B29C 47/90, // B29K27/06

(21) Application number : **84201924.2**

(22) Date of filing : **21.12.84**

(54) Method and apparatus for extruding a plastic pipe with controlled wall thickness.

(30) Priority : **27.12.83 NL 8304451**

(43) Date of publication of application :
**04.09.85 Bulletin 85/36**

(45) Publication of the grant of the patent :
**27.07.88 Bulletin 88/30**

(45) Mention of the opposition decision :
**30.12.92 Bulletin 92/53**

(84) Designated Contracting States :
**AT BE CH DE FR GB IT LI LU NL SE**

(56) References cited :
**DE-A- 2 208 238
DE-A- 2 232 930
DE-A- 2 542 331
DE-A- 3 006 566
DE-A- 3 107 701
DK-A- 1 362 97
FR-A- 2 221 264
GB-A- 1 372 074
GB-A- 2 070 290
US-A- 3 212 127
US-A- 3 307 215
US-A- 3 751 537
US-A- 3 775 035
US-A- 3 974 248
US-A- 4 000 402
US-A- 4 152 380**

(56) References cited :
**US-A- 4 339 403
US-A- 4 339 404
US-A- 4 351 785**
"Arbeiten mit Kunststoffen", Springer-Verlag 1981, pages 145-146
**US-A-4425289, published after priority date
US-A-4426239, published after priority date
US-A-4464318, published after priority date
US-A-4512943, published after filing date
US-A-4548570, published after filing date**
Rotherham and Haynes, "Control of Adiabatic Heat in the Extrusion of Rigid PVC Pipe", British Plastics 7-1969, pp 125 127
E. G. Fisher "Extrusion of Plastics" Newnes-Butterworth London, pages 180-182 and 296-300

(73) Proprietor : **WAVIN B.V.**
Händellaan 251
NL-8031 EM Zwolle (NL)

(72) Inventor : **Börger, Jacobus Bernardus**
Orionlaan 50
Hardenberg (NL)
Inventor : **Overeijnder, Hans**
Mercuriuslaan 6
Hardenberg (NL)

(74) Representative : **van der Veken, Johannes Adriaan et al**
EXTERPATENT B.V. P.O. Box 3241
NL-2280 GE Rijswijk (NL)

EP 0 153 511 B2

Jouve, 18, rue Saint-Denis, 75001 PARIS

## Description

The invention relates to a method of extruding a rigid solid plastic pipe of a thermoplastic polymer and controlling the wall thickness of the extruded pipe by means of a screw extruder provided with an extrusion die comprising a moulding end part, the temperature in each of several temperature-controlled sectors disposed about the moulding end part of the extrusion die being controlled as a function of the measurements of the wall thickness executed by means of a wall thickness measuring device at a number of measuring points, each located in measuring sectors which lie in the axial extension of the temperature controlled sectors, said temperature control for removing the difference observed between a measured wall thickness and another wall thickness being effected by heating means in the absence of cooling means in said temperature controlled sector, the plastic pipe body leaving the extrusion die being calibrated by calibrating means and being drawn off by speed controllable drawing means, the outer diameter and the wall thickness of the pipe as extruded being substantially maintained in the final calibrated pipe,

Such a method is known from FR-A-2.221.264. According to this method a plastic pipe extruded through an extrusion die comprising a moulding end part is drawn off by drawing means in the form of a draw bench. For controlling the wall thickness a wall thickness measuring device rotates around the extruded pipe and the signals from this measuring device are compared with a given standard wall thickness in a control unit controlling the temperature of heating means located in temperature controlled sectors and disposed about the moulding end of the extrusion die. The temperature of each zone is individually controlled for obtaining the desired wall thickness in the circumferential direction.

The measuring device also provides periodically informations for controlling the speed of the drawing means in order to control the wall thickness in longitudinal direction, but the speed of the drawing means is manually controlled. A higher speed of the drawing means provoking a decrease of the wall thickness in longitudinal direction, a lower speed provoking an increase of the wall thickness in longitudinal direction.

This prior art method presents the disadvantage that the extruded pipes obtained by this method still present an insufficiently equal wall thickness across their circumference and in a longitudinal direction. This involves a substantial loss of plastic as many parts of these pipes are too thick in comparison with the portions of the pipes presenting the minimum wall thickness meeting the international standards.

Moreover, though in the abovementioned document for the control of the temperature in the temperature controlled sectors the use of only heating means in the absence of cooling means is suggested in the claims, the practical embodiments make use of separate electrical heating means and separate cooling means through which cooling means a cooling fluid is passed. This is disadvantageous as it requires separate flexible hoses for connecting the cooling means with a cooling agent supply, mostly liquid oils. Exchanging an extrusion die for another die will then involve the step of loosening the connections of the flexible hoses to the extrusion die, spoilage of oils and many other inconvenience.

The invention now aims to overcome the abovementioned disadvantages and to provide particularly a method of manufacturing plastic pipes presenting a substantially equal wall thickness over their circumference.

This object is attained according to the invention in that the wall thickness as extended is measured in at least one measuring sector at several points circumferentially located next to one another, the average of these measurement values is determined and compared with the average of the values measured in all measuring sectors and the temperature in the temperature-controlled sector located in the axial extension of the one measuring sector aforementioned is controlled by said heating means as a function of the difference observed so as to remove the difference measured, said heating means only effecting the temperature of a superficial layer of the plastic pipe body in the moulding end and thus reducing or increasing the friction between the outer side of the plastic pipe body and the opposite inner surface of the moulding end part, a too small pipe wall thickness being increased by raising the temperature and a too high pipe wall thickness being decreased by decreasing the temperature in said temperature controlled sectors, and that the speed of the speed controllable drawing means being controlled by the difference between the minimum value of the wall thickness as determined from the signals coming from the wall thickness measuring device and the wall thickness as desired.

As in the method of the invention wall thickness deviations from the average wall thickness are compensated in a very excellent manner, the result is a very uniform wall thickness over the circumference of the pipe.

This method is also particularly advantageous for the production of a PVC pipe by means of a two screws comprising extruder as these pipes do not longer present two thickened wall parts in longitudinal direction opposite each other which are present in the PVC pipes obtained until now.

Measuring the wall thickness in at least one measuring sector at several points circumferentially located next to one another, the average of these measurement values being determined and compared with the average of the values measured in all measuring sectors and the temperature in the temperature controlled sector located in the axial extension of the one measuring sector aforementioned being controlled by only heating means as a function of the difference observed is known in a method of controlling the film thickness of tubular film in a blown film extrusion method as disclosed in U.S. 4.351.785.

However in this method any change of temperature in a temperature controlled sector will not only effect the temperature of the superficial layer of the tubular body but the temperature over the whole thickness involving a change of the viscosity of all plastic material of the tubular film. This means that the increase of the temperature in a sector of the die wall will decrease the viscosity of all plastic material in that sector but such material of a decreased viscosity will be much more inflated than material presenting a higher viscosity at the same haul off speed of the drawing means. Thus due to the higher inflation at higher temperatures in the temperature controlled sectors the thickness of the finished film will be lower than at lower temperatures in the temperature controlled sectors which is just the reverse of the temperature control of the invention causing a higher wall thickness of the finished plastic pipe at a higher temperature in a temperature controlled sector.

Moreover, GB-A-2.070.290 discloses a method of controlling the film thickness of a flat film produced by a flat film extruder by measuring the thickness over the width of the flat film by subdividing said film into equally long sections which sections are associated with correcting sections ($X_K$) of the sheet die from which they were extruded, said correcting sections being cooled when the measurement of the associated film section ($X_F$) shows a thick film portion and being heated when the measurement of the associated film section ($X_F$) shows a thin film portion, and that from the measurements the means thickness distribution ($S_x'$) is determined over the individual film sections ($X_F$) and the values of the means thickness distributions ($S_x'$) form a measure for the correcting signal for the setting elements of the individual correcting sections ($X_K$) at the sheet die that are associated with the respective film sections ($X_F$).

However in this method the use of only sector heating means is only applicable particularly for laminating installations, for the production of flat film only sector cooling means are used, so that one should expect that in the method of the invention only cooling means instead of heating means should be used. Moreover, the temperature of a flat film is also effected at both sides of the film which is impossible in the production of plastic pipes.

At last the control of the speed of drawing means by the difference between the minimum value of the wall thickness as determined from the signals coming from a wall thickness measuring device and the desired wall thickness is known per se in practice but this control does not provide the even wall thickness as obtained according to the invention.

Preferably the wall thickness is measured at 360 points equally distributed over the circumference, and the average is determined in eight measuring sectors at 45 measuring points per sector.

In this manner, a particularly even wall thickness is obtained.

Preferably, the various signal processing operations are performed by microprocessors.

This enables differences in wall thickness to be eliminated very rapidly and in a simple manner, and consequently a plastic pipe to be made whose wall thickness over the circumference of the pipe is quite uniform over an unlimited length.

The invention also relates to an apparatus for executing the process of the invention comprising a screw extruder with an extrusion die comprising a moulding end part and disposed about said moulding end part heating elements in the absence of cooling elements for controlling the temperature in each of several temperature controlled sectors, said temperature control for removing the difference observed between a measured wall thickness and another wall thickness being effected by said heating means in the absence of cooling means in said temperature controlled sectors, at least one wall-thickness measuring device for measuring the wall thickness of an extruded pipe, said measuring device being capable of performing measurements in all measuring sectors located in the axial extension of the temperature-controlled sectors, an element for comparing a wall thickness measuring value with another wall thickness value, a device acting upon the heating means, calibrating means and speed controllable drawing means for drawing off the plastic pipe body leaving the extrusion die the outer diameter and the wall thickness of the pipe as extruded being substantially maintained in the final calibrated pipe, as known from FR-A-2.221.264.

This apparatus is characterized in that in at least one measuring sector, a wall-thickness measuring device can perform several measurements and transmit such measurement data to a signal processing unit wherein said measurement data are averaged and the date measured in all measuring sectors can also jointly be transmitted to a wall thickness controlling unit comprising signal processing unit wherein said measurement data are averaged and a comparator element being provided for comparing the two values of the measurement-value averaging operation, said comparator element being capable of acting upon a temperature control-device for controlling the temperature of said heating elements in the absence of cooling means in a temperature-controlled sector located in the axial extension of the one-measuring sector aforementioned as a function of the difference observed so as to remove the difference measured, said heating means only effecting the temperature of a superficial layer of the plastic pipe body and thus reducing or increasing the friction between the outerside of the plastic pipe body and the opposite inner surface of the moulding end part, a too small wall thickness being increased by increasing the temperature and a too high wall thickness being decreased by decreasing the temperature in said temperature controlled sectors and a controlling unit controlling the speed of the drawing means by using the difference between the minimum value of the wall thickness as desired and the minimum value of the wall thickness as determined in the processing unit starting from the signals coming from the wall thickness measuring device.

Such an apparatus has a very simple and inexpensive construction and can therefore be easily put in to use for manufacturing plastic pipes of a very even wall thickness. It should be noted that the features that in at least one measuring sector, a wall thickness measuring device can perform several measurements and transmit such measurement data to a signal processing unit wherein said measurement data are averaged and the data measured in all measuring sectors can also jointly be transmitted to a wall thickness controlling unit comprising signal processing unit wherein said measurement data are averaged and a comparator element being provided for comparing the two values of the measurement-value averaging operation, said comparator element being capable of acting upon a temperature control-device for controlling the temperature of said heating elements in the absence of cooling means in a temperature-controlled sector located in the axial extension of the one-measuring sector aforementioned as a function of the difference observed so as to remove the diference measured are known per se from US-A-4.351.785 but in that case these features are applied to a blown film extruder, which is completely different from an extruder extruding rigid plastic pipes which are not inflated. Moreover, in said apparatus the heating means will not only effect the temperature of a superficial layer of a plastic pipe body but the whole body.

Moreover, GB-A-2.070.290 discloses a flat film extruder provided with wall thickness measuring means for measuring the thickness over the width of the flat film by subdividing said film into equally long sections which sections are associated with correcting sections ($X_K$) of the sheet die from which they were extruded, said correcting sections being cooled by acting upon cooling means and being heated by acting upon heating means when the measurement of the associated film section ($X_F$) shows a thin film portion and that from the measurements the mean thickness distribution ($S_x'$) is determined over the individual film sections ($X_F$) and the values of the mean thickness distributions ($S_x'$) form a measure for the correcting signal for the setting elements of the individual correcting sections ($X_K$) at the sheet die that are associated with the respective film sections ($X_F$).

However in this flat film extruder the heating means are located at both sides of the sheet die through which the flat film is extruded, such location of the heating means is not possible in an extruder for the extrusion of plastic pipe.

At last a controlling unit controlling the speed of the drawing means by using the difference between the minimum value of the wall thickness as desired and the minimum value of the wall thickness as determined in the processing unit starting from the signals coming from the wall thickness measuring device is known per se in practice and used for the control of the wall thickness of a plastic pipe during extrusion.

Preferably the apparatus of the invention comprises a screw extruder having at least two screws.

At last the invention also relates to a pipe wall thickness controlling unit for use in an apparatus according to the invention comprising at least
- a comparator for comparing a wall thickness measuring value with another wall thickness value provided with a connection to a pipe wall thickness measuring device
- a temperature control unit connected with said comparator and being provided with a connection to heating elements disposed about the circumference of the extrusion die moulding end part of an annular extrusion die of an extruder as known from FR-A-2.221.264 being characterized in that said controlling unit comprises
- a signal processing unit for processing wall thickness measuring data,
- a comparator element for comparing two values of wall thickness measurement value averaging operations one measurement averaging value obtained by averaging data of several wall thickness measurement in one measuring sector and the other measurement averaging value by averaging data of wall thickness measurements in all measuring sectors
- a temperature control unit connected with the comparator element and being provided with a connection to heating elements disposed about the moulding end of an annular extrusion die of an extruder

It should be noted that a pipe wall thickness controlling unit provided with a connection to the drawing means for drawing off a plastic pipe body leaving the extrusion die such that the difference between the minimum value of the wall thickness as desired and the minimum value of the wall thickness as measured is used for controlling the speed of said drawing means is known in practice.

Furthermore a signal processing unit for processing wall thickness measuring data of a tubular foil provided with a connection to a rotatable wall thickness measuring device and with a connection to heating elements disposed about the moulding end of an extrusion die of an extruder has been disclosed in US-A-4.351.785.

At last GB-A-2.070.290 discloses a signal processing unit being connected with a wall thickness measuring device moving over a flat film extruded by a slit die of an extruder and also being connected with means for activating heating elements disposed at the upper and lower side of the slit die.

The invention will be illustrated by means of an embodiment in the drawing, wherein:

- Fig. 1 is a diagrammatic side view of a plastic tube extruder comprising an apparatus for controlling the wall thickness according to the invention;
- Fig. 2 is a front view of the extrusion die as used with an extruder according to Fig. 1;
- Fig. 3 shows a wall-thickness profile as measured over the circumference of a tube;
- Fig. 4 represents the average wall-thickness profile per measuring sector.
- Fig. 5 represents a diagrammatic cross-section of another extrusion die as used with an extruder according to the invention, and
- Fig. 6a a cross section of a plastic pipe obtained by an extruder comprising two screws according to the prior art; and
- Fig. 6b a cross section of the same plastic pipe obtained according to the invention.

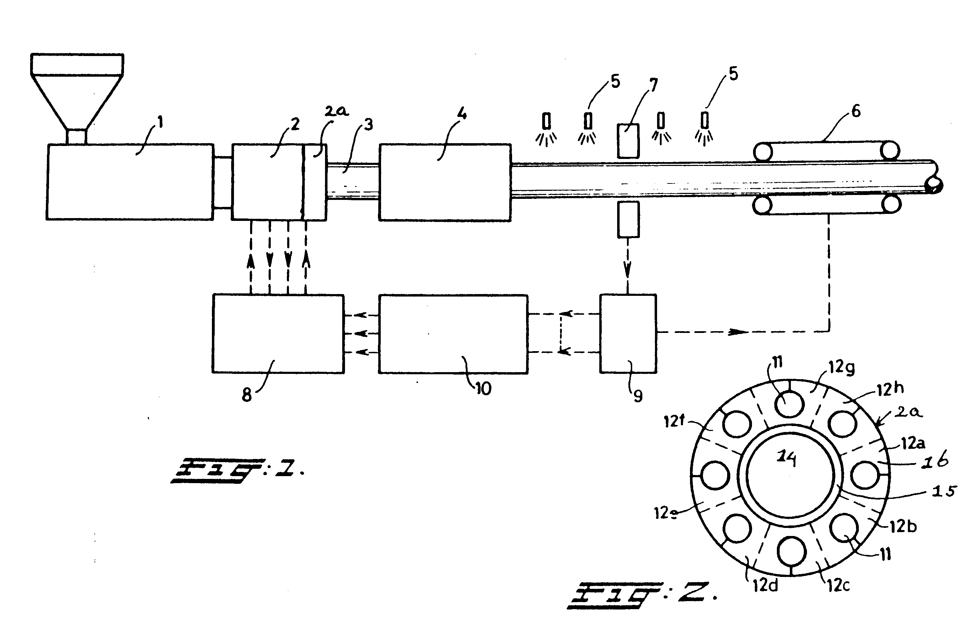

Fig. 1 shows an installation for manufacturing plastic pipe comprising an extruder with an extrusion die 2 comprising a moulding end part 2a from which the pipe issues. Said moulding end part 2a and the extrusion die 2 comprise a core 14 and a wall 16 bounding an annular extrusion slit 15. The extruder extrudes through the extrusion die and at last the moulding end part of said extrusion die. The pipe of polyvinylchloride, passes after extrusion successively through a calibrating device 4, a cooling arrangement 5 and a drawbench 6.

The installation furthermore comprises a wall thickness measuring device 7 rotatable about the pipe and enabling the pipe wall thickness to be measured by means of ultrasonic waves at several points distributed over the circumference.

Provided around moulding end part of the extrusion die 2 are heating elements 2 which enable the temperature to be changed in a number of temperature-controlled sectors 12a-12h around the moulding end part of the extrusion die. The various heating elements 11 are connected to a control unit 8 for controlling the temperature in each of the temperature-control sectors 12a-12h.

In addition, the installation comprises a first signal processing unit 9 the input of which is connected to a wall thickness measuring device 7 and one output of which is connected to the drawbench 6, another output of which being connected to the input of the second signal processing unit 10. The output of the second signal processing unit 10 is connected to the temperature-control unit 8.

The apparatus operates in the following manner.

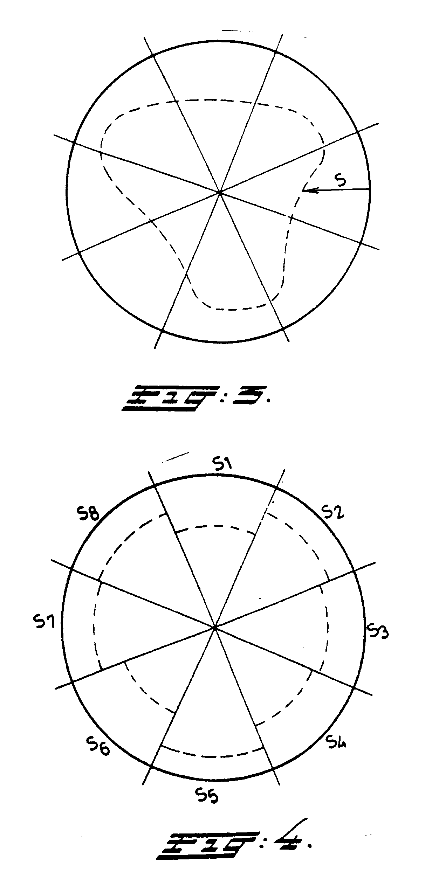

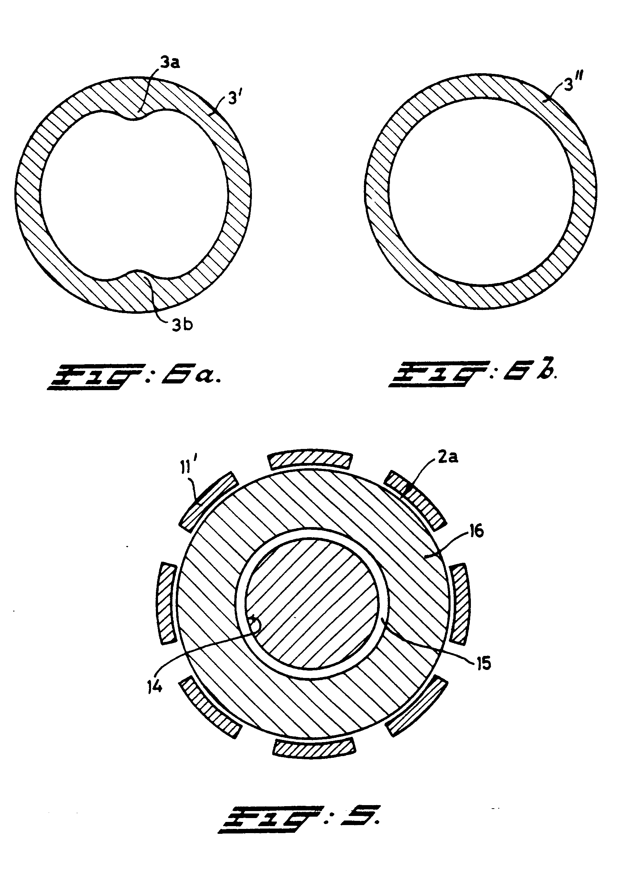

During extrusion of a rigid thermoplastic pipe 3, e.g. PVC pipe the wall thickness measuring device 7 rotates about the pipe continuously or intermittently and measures the pipe wall thickness at a number of points distributed over the pipe circumference. Plotting the values measured over the circumference of the pipe in a diagram results in the diagram of Fig. 3 which shows diagrammatically the wall-thickness profile of the pipe. At a certain point, the wall thickness is indicated by S.

The signals coming from the wall thickness measuring device 7 are transmitted to the first signal processing unit 9 wherein the minimum value of the wall thickness is determined and compared with the minimum wall thickness as desired. The difference between these values is used to set the speed of the drawbench. Thus, the overall thickness of the pipe 3 is being controlled, an increase of the drawbench speed generally resulting in a thinner pipe and a decrease of the speed generally resulting in a thicker pipe. Signals corresponding to wall thickness as measured at the various points distributed over the circumference are transmitted from the first signal processing unit 9 to the second signal processing unit 10. The latter determines, with respect to a number of measuring sectors of the pipe-wall circumference corresponding to the temperature-controlled sectors 12a-12h about the moulding end part 2a of the extrusion die, the average of the values measured in said measuring sectors 13a-13h as well as the average of all values measured over the circumference. The diagram of fig. 3 shows the average tube-wall thickness profile per measuring sector 13a-13h, the sector averages being indicated by S1-S8.

The sector average for each of the measuring sectors 13a-13h is compared with the circumferential average, and the value desired of the temperature of the extrusion-die temperature-control sector corresponding to the measuring sector concerned of the tube circumference is adjusted in the temperature-control unit 8 as determined by the deviation of the sector average from the circumferential average, in a manner so that the deviation is reduced or eliminated. In the event, for example that the sector average S1-S8 is lower than the circumferential average, the temperature in the corresponding temperature-controlled sector of the moulding end part 2a of the extrusion die 2 is raised, as a result of which in the location of said temperature-controlled sector the melt encounters less resistance in the moulding end part 2a of the extrusion die 2, thus locally causing more material to flow through the moulding end part 2a of the extrusion die. Consequently, the wall thickness of the pipe will locally increase.

In this manner, the wall thickness of the pipe 3 at various points distributed over the circumference is controlled as much as possible according to an average value. In conjunction with the control per se known of the minimum pipe wall thickness by means of the control of the speed of the drawbench 6, a wall thickness is obtained which is quite uniform over the circumference and which is very close to the minimum wall thickness desired. It is thus possible to save plastic material while forming a plastic pipe which meets all requirements as to strength characteristics. As it takes some time before a section of the tube 3 leaving the moulding end part 2a of the extrusion die 2 reaches the wall thickness measuring device 7 proper delays have been built into the control.

This also applies to the drawbench-speed control. In the present embodiment of the system, the wall thickness is measured at 360 points uniformly distributed over the circumference, and the wall thickness average is determined for eight measuring sectors distributed over the pipe circumference and each having 45 measuring points. Also, the number of temperature-control sectors disposed about the moulding end part 2a of the extrusion die is obviously eight. The various signal processing operations are performed by means of microprocessors. It goes without saying that the heating elements 11 can be used both for heat supply and for heat removal purposes by inactivating said heating elements.

Fig. 5 shows a cross section of the moulding end part 2a of an extrusion die 2, but now the heating elements 11' are located at the outer side of the wall 16 of moulding end part 2a.

Example

A polyvinylchloride pipe of 160 mm diameter and 3.2 mm required minimum wall thickness (nominal values) is extruded by means of a two screws extruder without applying the invention.

From measuring data appears that the inner side of the pipe comprises two thickened wall zones of 3.7 mm being opposite each other and therebetween two thin wall zones having a thickness of about 3.4 mm. Such a pipe 3' is shown in figure 6a showing the thickened zones 3a and 3b.

Use of the process of the invention and measuring the wall thickness at 360 points equally distributed over the circumference and the average is determined in eight measuring sectors having 45 measuring points per sector, provides the same polyvinylchloride pipe 3" (vide figure 6b) without said thickened wall zones. The pipe presents over the whole circumference a pipe wall thickness of about 3.3 mm.

It will be obvious that similar results are obtained with other thermoplastic polymers than polyvinylchloride.

## Claims

1. A method of extruding a rigid solid plastic pipe (3) of a thermoplastic polymer and controlling the wall thickness of the extruded pipe by means of a screw extruder (1) provided with an extrusion die (2) comprising a moulding end part (2a), the temperature in each of several temperature-controlled sectors disposed about the moulding end part of the extrusion die being controlled as a function of the measurements of the wall thickness executed by means of a wall thickness measure device (7) at a number of measuring points, each located in measuring sectors which lie in the axial extension of the temperature controlled sectors, said temperature control for removing the difference observed between a measured wall thickness and another wall thickness being effected by heating means (11, 11') in the absence of cooling means in said temperature controlled sectors, the plastic pipe body leaving the extrusion die being calibrated by calibrating means and being drawn off by speed controllable drawing means (6). the outer diameter and the wall thickness of the pipe as extruded being substantially maintained in the final calibrated pipe, characterized in that the wall thicknenes as extruded is measured in at least one measuring sector (S1-S8) at several points circumferentially located next to one another, the average of these measurement values is determined and compared with the average of the values measured in all measuring sectors (S1-S8) and the temperature in the temperature-controlled sector located in the axial extension of the one measuring sector aforementioned is controlled by said heating means (11, 11') as a function of the difference observed so as to remove the difference measured, said heating means (11) only effecting the temperature of a superficial layer of the plastic pipe body in the moulding end (2a) and thus reducing or increasing the friction between the outer side of the plastic pipe body and the opposite inner surface of the moulding end part (2a), is too small wall thickness being increased by raising the temperature and a too high wall thickness being decreased by decreasing the temperature in said temperature controlled sectors, and that the speed of the speed controllable drawing means (6) being controlled by the difference between the minimum value of the wall thickness as determined from the signals coming from the wall thickness measuring device and the wall thickness as desired.

2. A method according to claim 1, characterized in that an extruder comprising at least two screws is used.

3. A method according to claim 1 or 2, characterized in that the plastic pipe body of polyvinylchloride is executed.

4. A method according to any one of claims 1-3, characterized in that the wall thickness is measured in all measuring sectors at several points circumferentially located next to one another.

5. A method according to any one of claims 1-4, characterized in that the wall thickness is measured at 360 points equally distributed over the circumference, and the average is determined in eight measuring sectors having 45 measurings points per sector.

6. A method according to any one of claims 1-5, characterized in that the various signal processing operations are performed by means of microprocessors.

7. Apparatus for executing a process according to any one of claims 1 to 6, comprising a screw extruder (1) with an extrusion die (2) comprising a moulding end part (2a) and disposed about said moulding end part (2a) heating elements (11, 11') in the absence of cooling elements for controlling the temperature in each of several temperature controlled sectors, said temperature control for removing the difference observed between a measured wall thickness and another wall thickness being effected by said heating means in the absence of cooling means in said temperature controlled sectors, at least one wall-thickness measuring device (7) for measuring the wall thickness of an extruded pipe, said measuring device (7) being capable of performing measurements in all measuring sectors located in the axial extension of the temperature-controlled sectors, an element for comparing a wall thickness measuring value with another wall thickness value, a device (8) acting upon the heating means, calibrating means and speed controllable drawing means (6) for drawing off the plastic pipe body leaving the extrusion die, the outer diameter and the wall thickness of the pipe as extruded being substantially maintained in the final calibrated pipe, characterized in that in at least one measuring sector, a wall-thickness measuring device (7) can perform several measurements and transmit such measurement data to a signal processing unit (9) wherein said measurement data are averaged and the data measured in all measuring sectors can also jointly be transmitted to a wall thickness controlling unit comprising signal processing unit (9) wherein said measurement data are averaged and a comparator element (10) being provided for comparing the two values of the measurement-value averaging operation, said comparator element being capable of acting upon a temperature control-device (8) for controlling the temperature of said heating elements (11, 11') in the absence of cooling means in a temperature-controlled sector located in the axial extension of the one-measuring sector aforementioned as a function of the difference observed so as to remove the difference measured, said heating means (11) only effecting the temperature of a superficial layer of the plastic pipe body and thus reducing or increasing the friction between the outside of the plastic pipe body and the opposite inner surface of the moulding end part (2), a too small wall thickness being increased by increasing the temperature and a too high wall thickness being decreased by decreasing the temperature in said temperature controlled sectors and a controlling unit (9, 10) controlling the speed of the drawing means by using the difference between the minimum value of the wall thickness as desired and the minimum value of the wall thickness as determined in the processing unit (9) starting from the signals coming from the wall thickness measuring device (7).

8. Apparatus according to claim 7, characterized in that the extruder (1) comprises at least two screws.

9. An apparatus according to claim 7 or 8, characterized in that the apparatus comprises at least a wall-thickness measuring device (7) being capable of performing several measurements at measuring points circumferentially located next to one another in all measuring sectors.

10. Apparatus according to any one of claims 7-9, characterized in that said wall-thickness measuring device is capable of measuring the wall thickness at 360 measuring points uniformly distributed over the circumference, and each measuring sector comprises 45 measuring points.

11. Apparatus according to any one of claims 7-10, characterized in that the wall thickness measuring device is capable of rotating about the circumference of a pipe.

12. Apparatus according to any one of claims 7-10, characterized in that the signal processing unit (9) and the comparator element (10) are microprocessors.

13. A pipe wall thickness controlling unit (9, 10) for use in an apparatus according to any one of claims 7 to 12 comprising at least
    - a comparator (10) for comparing a wall thickness measuring value with another wall thickness value provided with a connection to a pipe wall thickness measuring device (7)

- a temperature control unit (8) connected with said comparator (10) and being provided with a connection to heating elements (11, 11′) disposed about the circumference of the extrusion die moulding end part (2a) of an extrusion die of an extruder (1)

characterized in that, said controlling unit comprises

- a signal processing unit (9) for processing wall thickness measuring data,

- a comparator element (10) for comparing two values of wall thickness measurement value averaging operations one measurement averaging value obtained by averaging data of several wall thickness measurement in one measuring sector and the other measurement averaging value by averaging data of wall thickness measurements in all measuring sectors

- a temperature control unit (8) connected with the comparator element and being provided with a connection to heating elements (11, 11′) disposed in temperature-controlled sectors about the moulding end (2a) of an extrusion die (2) of an extruder, said temperature control unit (8) controlling the temperature of said heating elements (11, 11′) in the absence of cooling means in a temperature-controlled sector located in the axial extension of the one measuring sector aforementioned as a function of the difference observed so as to remove the difference measured, said heating means (11, 11′) only effecting the temperature of a superficial layer of the plastic pipe body and thus reducing or increasing the friction between the outside of the plastic pipe body and the opposite inner surface of the moulding end part (2), a too small wall thickness being increased by increasing the temperature and a too high wall thickness being decreased by decreasing the temperature in said temperature controlled sectors.

- said controlling unit (9, 10) being also provided with a connection to the drawing means (6) for drawing off a plastic pipe body leaving the extrusion die (2) such that the difference between the minimum value of the wall thickness as desired and the minimum value of the wall thickness as measured is used for controlling the speed of said drawing means (6).

**Patentansprüche**

1. Verfahren zum Strangpressen eines festen Kunststoffrohrs (3) aus einem thermoplastischen Polymer und zum Regeln der Wanddicke des stranggepreßten Rohres mittels einer Schneckenstrangpresse (1), die mit einer einen Formgebungsendteil (2a) umfassenden Strangpreßdüse (2) versehen ist, wobei die Temperatur in jedem einer Mehrzahl von über den Formgebungsendteil der Strangpreßdüse angeordneten temperaturgeregelten Sektoren als eine Funktion der Wanddickenmessungen geregelt wird, die mittels eines Wanddickenmeßgerätes (7) an einer Anzahl von Meßpunkten durchgeführt werden, die jeweils in Meßsektoren angeordnet sind, die in der axialen Verlängerung der temperaturgeregelten Sektoren liegen, und wobei die Temperaturregelung zur Beseitigung des zwischen einer gemessenen Wanddicke und einer anderen Wanddicke festgestellten Unterschieds durch Heizmittel (11, 11′) in Abwesenheit von Kühlmitteln in den temperaturgeregelten Sektoren durchgeführt wird und der die Strangpreßdüse verlassende Kunststoffrohrkörper von einer Kalibriereinrichtung kalibriert und von geschwindigkeitsregelbaren Abziehmitteln (6) abgezogen wird, wobei der Außendurchmesser und die Wanddicke des Rohres wie extrudiert im fertigen kalibrierten Rohr im wesentlichen aufrechterhalten werden, dadurch gekennzeichnet, daß die Wanddicke wie extrudiert in zumindest einem Meßsektor (S1-S8) an mehreren in Umfangsrichtung einander nächstgelegenen Punkten gemessen wird, der Mittelwert dieser Meßwerte bestimmt sowie mit dem Mittelwert der in sämtlichen Meßsektoren (S1-S8) gemessenen werte verglichen wird und die Temperatur in dem in der axialen Verlängerung des genannten einen Meßsektors angeordneten temperaturgeregelten Sektor durch die Heizmittel (11, 11′) als eine Funktion des festgestellten Unterschieds geregelt wird, um den gemessenen Unterschied zu beseitigen, wobei die Heizmittel (11) nur die Temperatur einer Oberflächenschicht des Kunststoffrohrkörpers im Formgebungsende (2a) beeinflussen und damit die Reibung zwischen der Außenseite des Kunststoffrohrkörpers und der gegenüberliegenden Innenfläche des Formgebungsendteils (2a) verringern oder erhöhen, indem eine zu geringe Wanddicke durch Anheben der Temperatur in den temperaturgeregelten Sektoren erhöht und eine zu große Wanddicke durch Herabsetzen der Temperatur verringert wird, und die Geschwindigkeit der geschwindigkeitsregelbaren Abziehmittel (6) durch den Unterschied zwischen dem Minimalwert der Wanddicke, wie sie von den vom Wanddickenmeßgerät kommenden Signalen bestimmt wird, und der Sollwanddicke geregelt wird.

2. Verfahren nach Anspruch 1, dadurch gekennzeichnet, daß eine zumindest zwei Schnecken umfassende Strangpresse verwendet wird.

3. Verfahren nach Anspruch 1 oder 2, dadurch gekennzeichnet, daß der Kunststoffrohrkörper aus Polyvinylchlorid ausgeführt wird.

4. Verfahren nach einem der Ansprüche 1 bis 3, dadurch gekennzeichnet, daß die Wanddicke im sämtliche Meßsektoren an mehreren in Umfangsrichtung einander nächstgelegenen Punkten gemessen wird.

5. Verfahren nach einem der Ansprüche 1 bis 4, dadurch gekennzeichnet, daß die Wanddicke an 360 gleichmäßig über den Umfang verteilten Punkten gemessen und der Mittelwert in acht Meßsektoren mit 45 Meßpunkten pro Sektor bestimmt wird.

6. Verfahren nach einem der Ansprüche 1 bis 5, dadurch gekennzeichnet, daß die verschiedenen Signalverarbeitungsoperationen mittels Mikroprozessoren durchgeführt werden.

7. Vorrichtung zur Ausübung eines Verfahrens nach einem der Ansprüche 1 bis 6, bestehend aus einer Schneckenstrangpresse (1) mit einer einen Formgebungsendteil (2a) umfassenden Strangpreßdüse (2) und mit über den Formgebungsendteil (2a) angeordneten Heizelementen (11, 11′) in Abwesenheit von Kühlelementen zu Regelung der Temperatur in jedem einer Mehrzahl temperaturgeregelter Sektoren, wobei die Temperaturregelung zur Beseitigung des zwischen einer gemessenen Wanddicke und einer anderen Wanddicke festgestellten Unterschieds durch die Heizmittel in Abwesenheit von Kühlmitteln in den temperaturgeregelten Sektoren durchgeführt wird, zumindest einem Wanddickenmeßgerät (7) zum Messen der Wanddicke eines stranggepreßten Rohrs, das zur Durchführung von Messungen in sämtlichen Meßsektoren in der axialen Verlängerung der temperaturgeregelten Sektoren in der Lage ist, einem Element zum Vergleichen eines Wanddicken-Meßwertes mit einem anderen Wanddickenwert, einem auf die Heizmittel einwirkenden Gerät (8), einer Kalibriervorrichtung und geschwindigkeitsregelbaren Abziehmitteln (6) zum Abziehen des die Strangpreßdüse verlassenden Kunststoffrohrkörpers, wobei der Außerdurchmesser und die Wanddicke des Rohres wie extrudiert im fertigen kalibrierten Rohr im wesentlichen aufrechterhalten werden, dadurch gekennzeichnet, daß in zumindest einem Meßsektor ein Wanddickenmeßgerät (7) mehrere Messungen ausführen und diese Meßdaten an eine Signalverarbeitungseinheit (9) übertragen kann, in der die Meßdaten gemittelt werden, die in sämtlichen Meßsektoren gemessenen Daten auch gemeinsam an eine Wanddickenregeleinheit mit einer Signalverarbeitungseinheit (9) übertragen werden können, in der die Meßdaten gemittelt werden, und ein Vergleicherelement (10) zum Vergleichen der beiden Werte der Meßwertmittelungsoperation vorgesehen ist, welches auf ein Temperaturregelgerät (8) zum Regeln der Temperatur der Heizelemente (11,11′) in Abwesenheit von Kühlelementen in einem temperaturgeregelten Sektor in der axialen Verlängerung des einen genannten Meßsektors als eine Funktion des festgestellten Unterschieds zur Beseitigung des gemessenen Unterschieds einzuwirken in der Lage ist, wobei die Heizmittel (11) nur die Temperatur einer oberflächigen Schicht des Kunststoffrohrkörpers beeinflussen und damit die Reibung zwischen der Außenseite des Kunststoffrohrkörpers und der gegenüberliegenden Innenfläche des Formgebungsendteils (2a) verringern oder erhöhen, indem eine zu geringe Wanddicke durch Erhöhen der Temperatur in den temperaturgereglten Sektoren vergrößert und eine zu große Wanddicke durch Verringern der Temperatur verringert wird, und eine Regeleinheit (9,10) die Geschwindigkeit der Abziehmittel unter Verwendung des Unterschiedswischen dem Minimalwert der Sollwanddicke und dem Minimalwert der Wanddicke regelt, wie sie in der Verarbeitungseinheit (9) ausgehend von den vom Wanddickenmeßgerät (7) kommenden Signalen festgestellt wird.

8. Vorrichtung nach Anspruch 7, dadurch gekennzeichnet, daß die Strangpresse (1) zumindest zwei Schnecken aufweist.

9. Vorrichtung nach Anspruch 7 oder 8, dadurch gekennzeichnet, daß die Vorrichtung zumindest ein Wanddickenmeßgerät (7) aufweist, das zur Durchführung mehrerer Messungen an in Umfangsrichtung einander nächstgelegenen Meßpunkten in sämtlichen Meßsektoren in der Lage ist.

10. Vorrichtung nach einem der Ansprüche 7 bis 9, dadurch gekennzeichnet, daß das Wanddickenmeßgerät zur Messung der Wanddicke an 360 gleichmäßig über den Umfang verteilten Meßpunkten in der Lage ist und jeder Meßsektor 45 Meßpunkte umfaßt.

11. Vorrichtung nach einem der Ansprüche 7 bis 10, dadurch gekennzeichnet, daß das Wanddickenmeßgerät um den Umfang eines Rohres drehbar ist.

**12.** Vorrichtung nach einem der Ansprüche 7 bis 10, dadurch gekennzeichnet, daß die Signalverarbeitungseinheit (9) und das Vergleicherelement (10) Mikroprozessoren sind.

**13.** Rohrwanddickenregeleinheit (9,10) zur Verwendung in einer Vorrichtung nach einem der Ansprüche 7 bis 12, bestehend aus zumindest

- einem Vergleicher (10) zum Vergleichen eines Wanddickenmeßwertes mit einem anderen Wanddickenwert, der mit einer Verbindung zu einem Wanddickenmeßgerät (7) versehen ist, und
- einer Temperaturregeleinheit (8), die mit dem Vergleicher (10) verbunden und mit einer Verbindung zu Heizelementen (11,11') versehen ist, die über den Umfang des Strangpreßdüsen-Formgebungsendteils (2a) einer Strangpreßdüse einer Strangpresse (1) angeordnet sind,

dadurch gekennzeichnet, daß die Regeleinheit folgende Merkmale umfaßt:

- eine Signalverarbeitungseinheit (9) zum Verarbeiten von Wanddickenmeßdaten,
- ein Vergleicherelement (10) zum Vergleichen zweier Werte von Wanddickenmeßwertmittelungsoperationen, wobei ein Messungsmittelwert durch Datenmittelung mehrerer Wanddickenmessungen in einem Meßsektor und der andere Messungsmittelwert durch Datenmittelung von Wanddickenmessungen in sämtlichen Sektoren erreicht wird,
- eine Temperaturregeleinheit (8), die mit dem Vergleicherelement verbunden und mit einer Verbindung zu Heizelementen (11,11') versehen ist, die in temperaturgeregelten Sektoren über das Formgebungsende (2a) einer Strangpreßdüse (2) einer Strangpresse verteilt sind, wobei die Temperaturregeleinheit (8) die Temperatur der Heizelement (11,11') in Abwesenheit von Kühlmitteln in einem temperaturgeregelten Sektor in der axialen Verlängerung das einen genannten Meßsektors als eine Funktion des festgestellten Unterschieds regelt, um den gemessenen Unterschied zu beseitigen, und die Heizmittel (11,11') nur die Temperatur einer Oberflächenschicht des Kunststoffrohrkörpers beeinflussen und damit die Reibung zwischen der Außenseite des Kunststoffrohrkörpers und der gegenüberliegenden Innenfläche des Formgebungsendteils (2a) verringern oder erhöhen, indem eine zu geringe Wanddicke durch Anheben der Temperatur in den temperaturgeregelten Sektoren erhöht und eine zu große Wanddicke durch Herabsetzen der Temperatur verringert wird,
- die Regeleinheit (9,10) ist ferner mit einer Verbindung zu den Abziehmitteln (6) zum Abziehen eines die Strangpreßdüse (2) verlassenden Kunststoffrohrkörpers versehen, derart, daß der Unterschied zwischen dem Minimalwert der Sollwanddicke und dem Minimalwert der gemessenen Wanddicke zur Regelung der Geschwindigkeit der Abziehmittel (6) verwendet wird.

**Revendications**

1. Procédé d'extrusion d'un tube plastique rigide continu en polymère thermoplastique (3) et de contrôle de l'épaisseur de paroi du tube extrudé à l'aide d'une extrudeuse à vis (1) munie d'une filière d'extrusion (2) comprenant une partie d'extrémité de moulage (2a), la température respective de plusieurs secteurs à température contrôlée disposés autour de la partie d'extrémité de moulage de la filière d'extrusion étant contrôlée en fonction des mesures de l'épaisseur de paroi exécutées par un dispositif de mesure d'épaisseur de paroi (7) en un certain nombre de points de mesure, chacun situé dans des secteurs de mesure se trouvant dans le prolongement axial des secteurs à température contrôlée, ledit contrôle de température destiné à éliminer la différence observée entre une épaisseur de paroi mesurée et une autre épaisseur de paroi étant réalisé par des moyens chauffants (11,11')en l'absence de moyens de refroidissement dans les secteurs à température contrôlée, le corps du tube plastique sortant de la filière d'extrusion étant calibré par des moyens de calibrage et étiré par des moyens d'étirage à vitesse contrôlable (6), le diamètre extérieur et l'épaisseur de paroi du tube brut d'extrusion étant sensiblement maintenus dans le tube calibré final, caractérisé en ce que l'on mesure l'épaisseur de paroi brute d'extrusion dans au moins un secteur de mesure (S1-S8) en plusieurs points situés les uns à côté des autres sur la circonférence, la moyenne de ces valeurs mesurées étant déterminée et comparée à la moyenne des valeurs mesurées dans tous les secteurs de mesure (S1-S8), et on contrôle la température du secteur à température contrôlée dans le prolongement axial dudit secteur de mesure précité, à l'aide des moyens chauffants (11,11') en fonction de la différence constatée, afin d'éliminer la différence mesurée, les moyens chauffants (11) n'affectant que la température d'une couche superficielle du corps du tube plastique dans l'extrémité de moulage (2a) et permettant ainsi de réduire ou d'augmenter le frottement entre la face extérieure du corps de tube plastique et la surface intérieure opposée de la partie d'extrémité de moulage (2a), une épaisseur de paroi trop faible étant augmentée par élévation de la température et une épaisseur de paroi trop élevée étant diminuée par abaissement de la température dans les secteurs à température contrôlée, et en ce que l'on contrôle la vitesse des moyens d'étirage à vitesse contrôlable (6) à l'aide de la différence entre la valeur minimale de l'épaisseur de paroi déterminée à partir des signaux provenant du dispositif de mesure d'épaisseur de paroi et l'épaisseur de paroi désirée.

2. Procédé selon la revendication 1, caractérisée en ce que l'on utilise une extrudeuse comprenant au moins deux vis.

3. Procédé selon la revendication 1 ou 2, caractérisée en ce que le corps d'un tube plastique en poly(chlorure de vinyle) est réalisé.

4. Procédé selon l'une quelconque des revendications 1 à 3, caractérisé en ce que l'épaisseur de paroi est mesurée dans tous les secteurs de mesure en plusieurs points situés sur la circonférence les uns à côté des autres.

5. Procédé selon l'une quelconque des revendications 1 à 4, caractérisé en ce que l'épaisseur de paroi est mesurée en 360 points répartis uniformément sur la circonférence et la moyenne est déterminée dans huit secteurs de mesure comprenant chacun 45 points de mesure.

6. Procédé selon l'une quelconque des revendications 1 à 5, caractérisé en ce que les diverses opérations de traitement de signaux sont exécutés par des microprocesseurs.

7. Appareil pour la mise en oeuvre d'un procédé conforme à l'une quelconque des revendications 1 à 6, comprenant une extrudeuse à vis (1) munie d'une filière d'extrusion (2) présentant une partie d'extrémité de moulage (2a) et, disposés autour de la partie d'extrémité de moulage (2a), des éléments chauffants (11,11′) en l'absence d'éléments de refroidissement, pour contrôler la température dans chacun des divers secteurs à température contrôlée, ledit contrôle de température destiné à éliminer la différence constatée entre une épaisseur de paroi mesurée et une autre épaisseur de paroi étant assuré par lesdits moyens chauffants en l'absence de moyens de refroisissement dans les secteurs à température contrôlée, au moins un dispositif de mesure d'épaisseur de paroi (7) pour mesurer l'épaisseur de paroi d'un tube extrudé, ce dispositif de mesure (7) étant apte à réaliser des mesures dans tous les secteurs de mesure situés dans le prolongement axial des secteurs à température contrôlée, un élément permettant de comparer une valeur mesurée d'épaisseur de paroi avec une autre valeur d'épaisseur de paroi, un dispositif (8) agissant sur les moyens chauffants, les moyens de calibrage et les moyens d'étirage à vitesse contrôlable (6) pour étirer le corps de tube plastique sortant de la filière d'extrusion, le diamètre extérieur et l'épaisseur de paroi du tube brut d'extrusion étant sensiblement maintenus dans le tube calibré final, caractérisé en ce que, dans au moins un secteur de mesure, un dispositif de mesure d'épaisseur de paroi (7) est apte à réaliser plusieurs mesures et à transmettre ces données de mesure à une unité de traitement de signaux (9) dans laquelle la moyenne des données de mesure est déterminée et les données mesurées dans tous les secteurs de mesure peuvent être également transmises conjointement à une unité de contrôle d'épaisseur de paroi comprenant l'unité de traitement de signaux (9) dans laquelle la moyenne des données de mesure est déterminée , un élément comparateur (10) étant prévu pour comparer les deux valeurs de l'opération d'élaboration de la moyenne des valeurs mesurées, ledit élément comparateur étant apte à agir sur un dispositif de commande de température (8) pour contrôler la température des éléments chauffants (11,11′) en l'absence de moyens de refroidissement dans un secteur à température contrôlée situé dans le prolongement axial du secteur de mesure précité en fonction de la différence constatée afin d'éliminer la différence mesurée, les moyens chauffants (11) n'affectant que la température d'une couche superficielle du corps de tube plastique et réduisant ou augmentant de ce fait le frottement entre la face extérieure du corps de tube plastique et la surface intérieure opposée de la partie d'extrémité de moulage (2), une épaisseur de paroi trop faible étant augmentée par élévation de la température et une épaisseur de paroi trop forte étant diminuée par abaissement de la température dans les secteurs à température contrôlée, et une unité de commande (9,10) contrôlant la vitesse des moyens d'étirage à partir de la différence entre la valeur minimale de l'épaisseur de paroi désirée et la valeur minimale de l'épaisseur de paroi déterminée par l'unité de traitement (9) à partir des signaux provenant du dispositif de mesure d'épaisseur de paroi (7).

8. Appareil selon la revendication 7, caractérisé en ce que l'extrudeuse (1) comprend au moins deux vis.

9. Appareil selon la revendication 7 ou 8, caractérisé en ce que l'appareil comprend au moins un dispositif de mesure d'épaisseur de paroi (7) apte à effectuer plusieurs mesures en des points de mesure situé circonférentiellement les uns à côté des autres dans tous les secteurs de mesure.

10. Appareil selon l'une quelconque des revendications 7 à 9, caractérisé en ce que le dispositif de mesure d'épaisseur de paroi est apte à mesurer l'épaisseur de paroi en 360 points de mesure répartis uniformément sur la circonférence et chaque secteur de mesure comprend 45 points de mesure.

11. Appareil selon l'une quelconque des revendications 7 à 10, caractérisé en ce que le dispositif de mesure d'épaisseur de paroi est apte à tourner autour de la circonférence d'un tube.

12. Appareil selon l'une quelconque des revendications 7 à 10, caractérisé en ce que l'unité de traitement de signaux (9) et l'élément comparateur (10) sont des microprocesseurs.

13. Unité de contrôle d'épaisseur de paroi de tubes (9,10) utilisable dans un appareil conforme à l'une quelconque des revendications 7 à 12, comprenant au moins :

    - un comparateur (10) pour comparer une valeur mesurée d'épaisseur de paroi à une autre valeur d'épaisseur de paroi, muni d'un raccordement avec un dispositif de mesure d'épaisseur de paroi de tube (7).

    - une unité de commande de température (8) raccordée audit comparateur (10) et comprenant un raccordement avec des éléments chauffants (11,11') disposés autour de la circonférence de la partie d'extrémité de moulage (2a) d'une filière d'extrusion d'une extrudeuse (1),caractérisée en ce que ladite unité de contrôle comprend

    - une unité de traitement de signaux (9) pour traiter les données de mesure d'épaisseur de paroi,

    - un élément comparateur (10) pour comparer deux valeurs issues des opérations d'élaboration de la moyenne des mesures d'épaisseur de paroi, une valeur moyenne de mesure étant obtenue par élaboration de la moyenne des données de plusieurs mesures d'épaisseur de paroi dans un secteur de mesure, tandis que l'autre valeur moyenne de mesure est obtenue par élaboration de la moyenne des données des mesures d'épaisseur de paroi dans tous les secteurs de mesure,

    - une unité de commande de température (8) raccordée à l'élément comparateur et munie d'un raccordement avec des éléments chauffants (11,11') disposés dans des secteurs à température contrôlée autour de la partie d'extrémité de moulage (2a)d'une filière d'extrusion (2) d'une extrudeuse, ladite unité de commande de température (8) contrôlant la température des éléments chauffants (11,11') en l'absence de moyens de refroidissement dans un secteur à température contrôlée situé dans le prolongement axial du secteur de mesure précité en fonction de la différence constatée de façon à éliminer la différence mesurée, les moyens chauffants (11,11') n'affectant que la température d'une couche superficielle du corps de tube plastique et ainsi diminuant ou augmentant le frottement entre la face extérieure du corps de tube plastique et la surface intérieure opposée de la partie d'extrémité de moulage (2), une épaisseur de paroi trop faible étant augmentée par élévation de la température et une épaisseur de paroi trop élevée étant diminuée par abaissement de la température dans lesdits secteurs à température contrôlée,

- ladite unité de contrôle (9,10) étant en outre munie d'un raccordement avec des moyens d'étirage (6) pour étirer un corps de tube plastique sortant de la filière d'extrusion (2), la différence entre la valeur minimale de l'épaisseur de paroi désirée et la valeur minimale d'épaisseur de paroi mesurée étant utilisée pour contrôler la vitesse des moyens d'étirage (6).

*FIG.1.*

*FIG.2.*

EP 0 153 511 B2

*FIG : 3.*

*FIG : 4.*

_FIG: 6 a._

_FIG: 6 b._

_FIG: 5._